# EUROPÄISCHE PATENTSCHRIFT

(11) **EP 1 745 688 B1**
(45) Veröffentlichungstag und Bekanntmachung des Hinweises auf die Patenterteilung: **25.06.2008**
(21) Anmeldenummer: 05015959.9
(22) Anmeldetag: 22.07.2005
(51) Int. Cl.: A01D 34/82

(54) **Handgeführtes Bodenbearbeitungsgerät, insbesondere Rasenmäher**
Hand guided soil working apparatus, in partilcular lawn mower
Appareil guidé à main pour le travail du sol

(43) Veröffentlichungstag der Anmeldung: 24.01.2007
(73) Patentinhaber: OUTILS WOLF, 67165 Wissembourg Cedex (FR)
(72) Erfinder:
(74) Vertreter: Brommer, Hans Joachim

(56) Entgegenhaltungen:
- EP-A- 0 903 073
- US-A- 4 558 558

## Beschreibung

Die Erfindung betrifft ein handgeführtes Bodenbearbeitungsgerät mit einem Fahrantrieb, insbesondere einen Rasenmäher mit hydraulischem Fahrantrieb, wobei der Fahrantrieb mit einem Schalthebel verbunden ist, der in zumindest einen Vorwärtsgang und zumindest einen Rückwärtsgang einzustellen ist und wobei der Fahrantrieb außerdem mit einem Totmannbügel zusammenwirkt (siehe z.B. EP-A-0 903 073).

Derartige Bodenbearbeitungsgeräte haben im allgemeinen einen Benzin- oder Elektromotor, der einerseits ein Bearbeitungswerkzeug, im bevorzugten Anwendungsfall des Rasenmähers also ein umlaufendes Messer antreibt und der andererseits mechanisch oder hydraulisch mit einem Fahrantrieb verbunden ist, um das Gerät vorwärts oder rückwärts zu verfahren. Zur Verringerung der Unfallgefahr unterliegen diese Geräte strengen Sicherheitsvorschriften. So ist insbesondere bei Rasenmähern ein Totmannbügel vorgeschrieben, der von der Bedienungsperson aktiv gehalten werden muss, um die Funktion des Gerätes aufrecht zu erhalten. Lässt die Bedienungsperson beispielsweise den Totmannbügel los, so wird automatisch der Antrieb des Bearbeitungswerkzeuges wie auch der Fahrantrieb ausgeschaltet; der Motor kann dabei im Leerlauf weiterlaufen.

Neben dem genannten Totmannbügel muss die Bedienungsperson mit einem weiteren Hebel die Geschwindigkeit des Fahrantriebes regulieren. Darüber hinaus wird ein Schalthebel benötigt, der das Einlegen des Rückwärtsganges gestattet und der häufig auch mehrere Vorwärtsgänge anbietet.

Durch diese zahlreichen Stellglieder wird nicht nur die Herstellung des Gerätes verteuert, sondern auch die Bedienung erschwert.

Hiervon ausgehend liegt der vorliegenden Erfindung die Aufgabe zugrunde, die Bedienung solcher Bodenbearbeitungsgeräte mit Fahrantrieb zu vereinfachen. Gleichzeitig soll sich das erfindungsgemäße Gerät durch kostengünstigen Aufbau auszeichnen. Die Bedienungssicherheit soll dabei in vollem Umfang gewahrt bleiben.

Diese Aufgabe wird erfindungsgemäß dadurch gelöst, dass der Totmannbügel derart mit dem Schalthebel zusammenwirkt, dass die Betätigung des Totmannbügels bei eingelegtem Rückwärtsgang automatisch den Schalthebel aus dem Rückwärtsgang in einen Vorwärtsgang, zweckmäßig in den ersten Gang, verstellt und dass der Schalthebel im Rückwärtsgang elastisch in Richtung auf einen Vorwärtsgang belastet ist.

Hierdurch ergibt sich der Vorteil, dass die Bedienungsperson beim Wechsel von Rückwärtsfahrt zu Vorwärtsfahrt nicht wie bisher erst den Schalthebel und dann den Totmannbügel bedienen muss sondern die Betätigung des Totmannbügels genügt. Der Betätigungsaufwand wird dadurch halbiert. Gleichzeitig bleiben die Sicherheitsanforderungen erfüllt, weil der Schalthebel nur solange im Rückwärtsgang eingelegt bleibt, wie er von der Bedienungsperson gehalten wird. Sobald die Bedienungsperson den im Rückwärtsgang stehenden Schalthebel loslässt, springt er aufgrund der auf ihn einwirkenden Vorspannung aus dem Rückwärtsgang heraus - unabhängig davon, ob der Totmannbügel betätigt wird oder nicht.

Besonders zweckmäßig ist es dabei, dass der Schalthebel beim Loslassen automatisch ohne Passieren einer Neutralstellung vom Rückwärtsgang direkt in den ersten Vorwärtsgang verstellt wird. Das bisher notwendige manuelle Vorwählen des ersten Ganges wird dadurch überflüssig. Das direkte Einlegen des Vorwärtsganges führt zu keinem ruckartigen Fahrtrichtungswechsel, denn die Vorwärtsfahrt beginnt erst dann, wenn der Totmannbügel betätigt wird, wobei eine geringe Auslenkung des Totmannbügels eine geringe Fahrgeschwindigkeit, eine stärkere Auslenkung eine höhere Fahrgeschwindigkeit ergibt.

Eine andere zweckmäßige Weiterbildung der Erfindung besteht darin, dass der Schalthebel im Rückwärtsgang einen gewissen Verstellbereich hat, um die Fahrgeschwindigkeit zu regulieren. Auch dabei kann die Bedienungsperson von der Betätigung des Totmannschalters entlastet werden, ohne dass die Sicherheit beeinträchtigt wird.

Hingegen kann die Fahrgeschwindigkeit bei Vorwärtsfahrt durch den Totmannbügel reguliert werden.

Damit der Schalthebel nicht versehentlich in den Rückwärtsgang verstellt wird, empfiehlt es sich, ihn mit einem Sperrhebel zu verbinden, dessen Betätigung Voraussetzung für das Einlegen des Rückwärtsganges ist. Die Betätigung des Sperrhebels kann etwa durch seitliches Wegdrücken, durch axiales Herunterdrücken oder Herausziehen des Schalthebels erfolgen. Selbstverständlich kann der Sperrhebel aber auch als in den Schalthebel integrierter Knopf oder dergleichen ausgebildet sein.

Wenn mehrere Vorwärtsgänge vorhanden sind, empfiehlt es sich, dass der Schalthebel mittels einer elastischen Schnappverbindung, insbesondere mittels einer angefederten Klinke oder dergleichen in den Vorwärtsgängen gehalten wird. Dadurch ist ein müheloser Wechsel zwischen den Vorwärtsgängen möglich.

Im allgemeinen muss der Totmannbügel gegen Federkraft aus seiner inaktiven Position in die Betriebsposition verstellt werden. Wird der Totmannbügel losgelassen, so kommt es zu einer abrupten Unterbrechung des Fahrantriebes entsprechend einer Vollbremsung. Dieses Verhalten ist einerseits unangenehm für die Bedienungsperson, andererseits führt es bei der bevorzugten Anwendung als Rasenmäher auch zu einer Schädigung des Rasens. Aus diesem Grund wird ein Dämpfungselement vorgeschlagen, das die Rückstellung des Totmannbügels in die inaktive Position verzögert. Das Gerät wird dadurch nicht mehr abrupt blockiert, sondern sanft abgebremst. Das Dämpfungselement kann ein Hydraulik- oder Pneumatikzylinder sein, der beispielsweise zwischen dem Totmannbügel und dem Führungsbügel des handgeführten Bodenbearbeitungsgerätes angeordnet ist.

Besonders zweckmäßig ist die Anwendung der Erfindung bei hydraulischen Fahrantrieben. Diese haben meist eine Hydraulikpumpe in Form einer Vielstempelpumpe mit variablem Verdrängervolumen, wobei die Hubbewegung der Stempel durch eine in ihrer Neigung verstellbare Steuerplatte erzeugt wird. Diese Steuerplatte steht erfindungsgemäß mit dem Schalthebel und dem Totmannbügel in Wirkverbindung, und zwar derart, dass der Schalthebel bei Vorwärtsfahrt die Maximalneigung der Steuerplatte begrenzt, wogegen die Betätigung des Totmannbügels bei Vorwärtsfahrt die Neigung der Steuerplatte von schwach (Langsamfahrt) bis stark (schnelle Fahrt) verstellt. Dies wird vorzugsweise dadurch realisiert, dass der Schalthebel eine Kulissenführung für ein am Totmannbügel angeordnetes Schwenklager aufweist, derart, dass diese Kulissenführung ein von der Schalthebelstellung abhängiges Übersetzungsverhältnis zwischen der Auslenkung des Totmannbügels und der Auslenkung des Schwenklagers erzeugt und dass die Auslenkung des Schwenklagers auf die Neigung der Steuerplatte einwirkt.

Wird der Schalthebel in den Rückwärtsgang verstellt, so wird die Neigung der Steuerplatte in die Gegenrichtung verstellt, das heißt, dass der von der Hydraulikpumpe erzeugte Ölfluss seine Richtung umkehrt. Dabei ist es ebenfalls möglich, durch weitere Betätigung des Schalthebels im Rückwärtsgang die Neigung der Steuerplatte im Sinne langsamer oder schneller Fahrt zu verstellen, ohne dabei den Totmannbügel zu betätigen.

Weitere Merkmale und Vorteile der Erfindung ergeben sich aus der nachfolgenden Beschreibung eines Ausführungsbeispieles und aus der Zeichnung bei der bevorzugten Anwendung der Erfindung an einem Rasenmäher; dabei zeigt
- Figur 1: eine Gesamtansicht eines Rasenmähers;
- Figur 2: eine Seitenansicht auf die Bedienungseinheit des Rasenmähers mit dem Schalthebel im ersten Gang;
- Figur 3: die gleiche Ansicht mit dem Schalthebel im Rückwärtsgang;
- Figur 4: die gleiche Ansicht mit dem Schalthebel im dritten Gang und
- Figur 5: die gleiche Ansicht wie Figur 2, jedoch mit einem Dämpfungselement für den Totmannbügel.

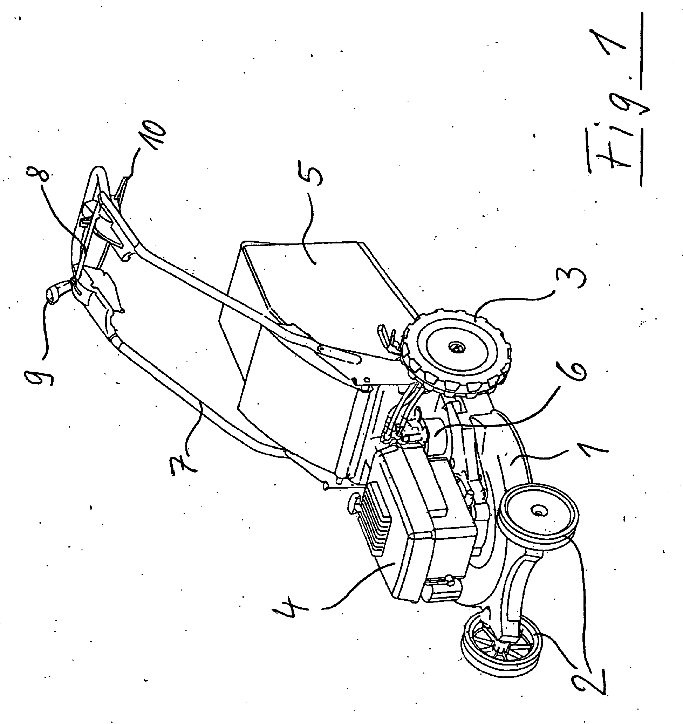

Figur 1 zeigt einen Rasenmäher mit einem haubenförmigen Gehäuse 1, an dem zwei freilaufende Vorderräder 2 und zwei angetriebene Hinterräder 3 gelagert sind. An der Oberseite des Gehäuses 1 ist ein Antriebsmotor 4 angeflanscht, im Ausführungsbeispiel in Form eines Benzinmotors. Er treibt über eine nach unten ragende Welle ein unter dem Gehäuse 1 horizontal umlaufendes, nicht sichtbares Schneidmesser. Das Schnittgut wird durch einen tangential nach hinten laufenden Auswurfkanal in einen lösbar am Gehäuse 1 eingehängten Sammelbehälter 5 befördert.

Der Antrieb der beiden Hinterräder 3 erfolgt über eine Hydraulikpumpe 6, die an der Oberseite des Gehäuses 1 angeflanscht ist und von dem Motor 4 angetrieben wird. Sie pumpt Hydraulikflüssigkeit zu zwei parallel geschalteten Hydraulikmotoren, die jeweils an der Innenseite ihres zugeordneten Hinterrades angeordnet und mit diesem verbunden sind.

Die Bedienung des Rasenmähers erfolgt über einen schräg nach hinten und oben laufenden Führungsbügel 7, der in seinem oberen Bereich eine Bedieneinheit trägt. Die Bedieneinheit besteht aus einem oberhalb des Führungsbügels 7 quer verlaufenden Bügel 8, der in bekannter Weise als Totmannschalter für den Messer-Antrieb fungiert, indem er vom Benutzer auf das hintere Ende des Führungsbügels heruntergeschwenkt wird, einem unterhalb des Führungsbügels 7 angeordneten, quer verlaufenden Totmannbügel 10, der vom Benutzer nach oben gegen das hintere Ende des Führungsbügels geschwenkt werden kann, um den Fahrantrieb einzuschalten, aus einem an der rechten Seite des Führungsbügels gelagerten Schalthebel 9 und schließlich aus zwei an sich bekannten Hebeln an der linken Seite des Führungsbügels, von denen der eine als Gashebel für die Drehzahl des Motors 4 fungiert, während der andere ein Verriegelungsschalter ist, der mit dem Totmannschalter 8 für den Messer-Antrieb zusammenwirkt. Dieser Entriegelungsschalter muss - wie bekannt - vom Benutzer zuerst betätigt werden, damit anschließend durch Herunterschwenken des Totmannschalters 8 der Messer-Antrieb aktiviert werden kann.

Der genauere Aufbau des erfindungsgemäßen Teiles der Bedienungseinheit erschließt sich aus den folgenden Figuren. Man erkennt dort den Schalthebel 9 und den Totmannbügel 10 für den Fahrantrieb, die beide um eine gemeinsame horizontale Achse 11 verschwenkbar am Führungsbügel 7 gelagert sind. Zu dem Begriff "Totmannbügel" sei angemerkt, dass darunter jedes Stellglied verstanden wird, gleichgültig, wie seine Form ist.

Der Schalthebel 9 weist ein Griffstück 9a auf, das in Längsrichtung verschiebbar an dem Hebelteil 9b gelagert ist. Außerdem trägt das Hebelteil 9b einen Haltestift 9c, der einerseits einen Bowdenzug 12 aufweist für die Verstellung der Hydraulikpumpe 6, andererseits mit einer Sperrklinke 13 zusammenwirkt. Diese Sperrklinke 13 ist über eine horizontale Welle 14 schwenkbar gelagert und wird durch eine Feder 15 in elastischem Eingriff mit dem Haltestift 9c gehalten, wobei sie im Bereich des Haltestiftes eine mit dem Haltestift korrespondierende Aussparung 13a aufweist, derart, dass sie durch die Feder 15 mit dem Haltestift 9c verrastet. Gleichartige Aussparungen 13a sind daneben angeordnet, damit der Schalthebel 9 in drei unterschiedlichen Stellungen mit der Sperrklinke 13 verrasten kann. Diese drei Stellungen entsprechen den drei Vorwärtsgängen, wobei die gezeichnete Stellung dem ersten Gang entspricht. Die Verstellung des Schalthebels vom ersten bis zum dritten Gang erfolgt durch nach vorne drücken des Schalthebels; dabei schnappt der Haltestift 9c jeweils in die nächstfolgende Aussparung 13a der Sperrklinke 13 ein, ohne dass ein zusätzlicher manueller Eingriff erforderlich ist.

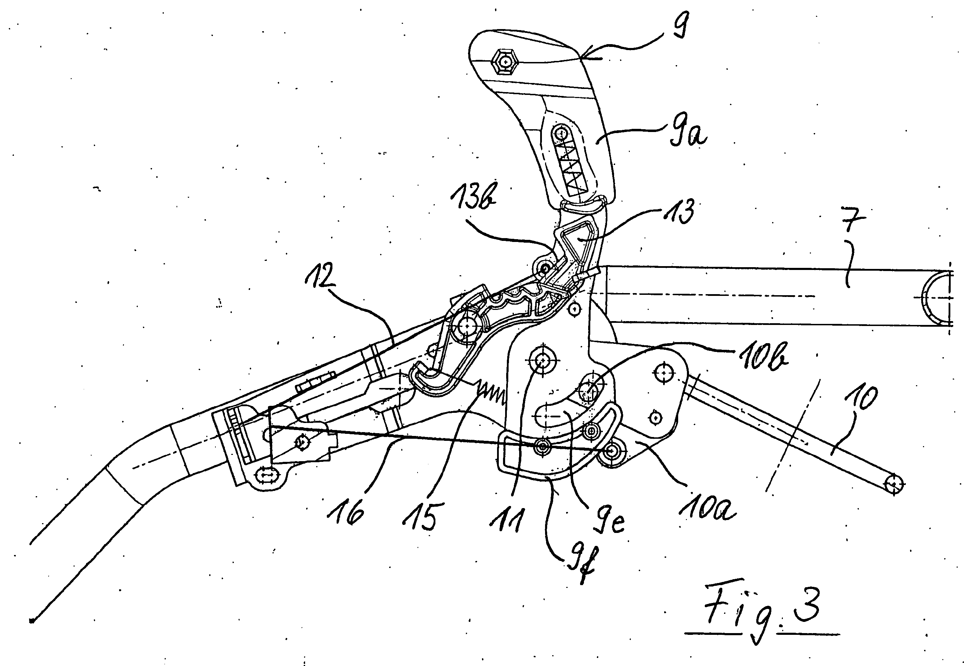

Soll der Schalthebel 9 jedoch in den Rückwärtsgang verstellt werden, so muss er nach hinten verschwenkt werden, was durch die Sperrklinke 13 verhindert wird. Zum Aufheben der Sperrwirkung ist es erforderlich, das Griffstück 9a entgegen der Feder 9d axial nach unten zu drücken, so dass es mit seinem unteren Ende die Sperrklinke 13 ein Stück im Uhrzeigersinn verschwenkt und dadurch den Engriff zwischen der Sperrklinke 13 und dem Haltestift 9c aufhebt. Der Schalthebel kann dann nach hinten in den Rückwärtsgang verschwenkt werden. Dieser Zustand ist in Figur 3 dargestellt.

Man erkennt in Figur 3, dass der Haltestift 9c des Schalthebels 9 im Rückwärtsgang keine definierte Position einnimmt, sondern längs einer Flanke 13b entlanggleiten kann. Der Bowdenzug 12 wird dadurch mehr oder weniger weit nach hinten gezogen. Er stellt dadurch die Hydraulikpumpe auf eine mehr oder weniger schnelle Rückwärtsfahrt ein.

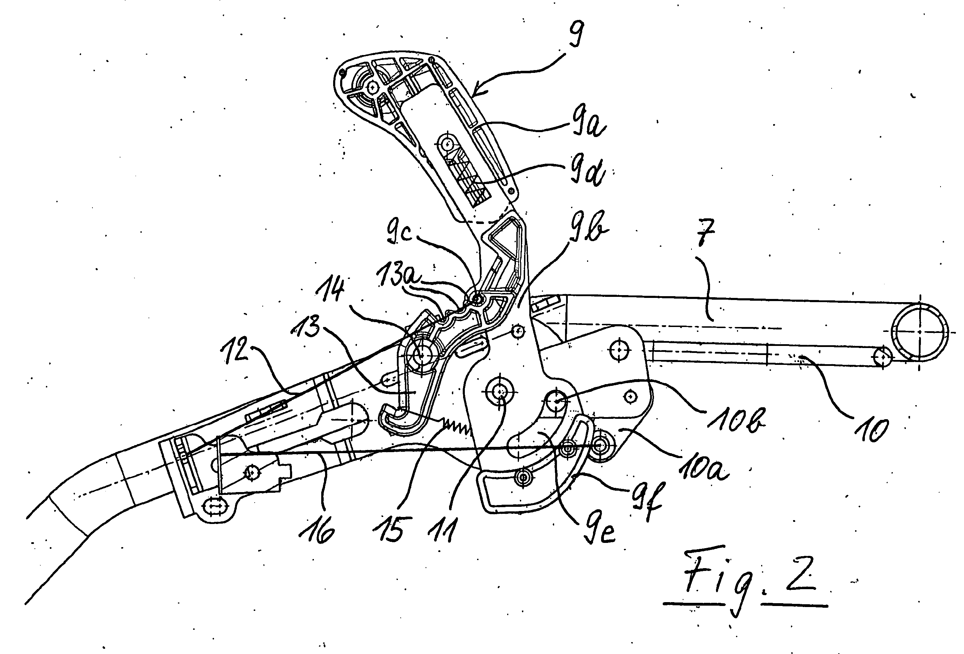

Außerdem erkennt man aus Figur 3, dass der Schalthebel 9, wenn er von der Bedienungsperson losgelassen wird, aufgrund der von der Feder 15 gegen den Haltestift 9c angepressten Flanke 13b automatisch aus dem Rückwärtsgang-Bereich herausgedrückt wird. Der Schalthebel 9 wird also automatisch soweit nach vorne verstellt, bis er die in Figur 2 abgebildete Stellung für den ersten Vorwärtsgang erreicht hat.

Der Totmannbügel 10 ist in Figur 2 nach oben gegen den Führungsbügel 7 geschwenkt. Dies entspricht der Betriebsposition für die Vorwärtsfahrt. Er ist über ein Schwenklager 10a mit einem Bowdenzug 16 verbunden. Der Bowdenzug 16 steht seinerseits in Wirkverbindung mit der Hydraulikpumpe 6 und dient für die Geschwindigkeitsregulierung bei Vorwärtsfahrt. Dabei ergibt die in Figur 2 dargestellte nach oben geschwenkte Position des Totmannbügels 10 die Höchstgeschwindigkeit in dem jeweils eingestellten Vorwärtsgang, wogegen das Loslassen des Totmannbügels den Fahrantrieb auf 0 stellt.

Wesentlich ist, dass zwischen dem Totmannbügel 10 und dem Schalthebel 9 eine formschlüssige Verbindung mit begrenzter Beweglichkeit besteht, damit die Betätigung des Totmannbügels 10 automatisch den Schalthebel 9 aus dem Rückwärtsgang herausdrückt. Diese Verbindung ist im Ausführungsbeispiel realisiert durch einen am Totmannbügel montierten Mitnehmerstift 10b und einen am Schalthebel 9 angeordneten Schlitz 9e. Der Schlitz verläuft bogenförmig um das für Schalthebel 9 und Totmannbügel 10 gemeinsame Schwenklager 11 und umgreift den Mitnahmestift 10b. Außerdem ist die Position des Schlitzes 9e so auf die Position des Mitnahmestiftes 10b abgestimmt, dass der Schalthebel 9 alle Vorwärtsgänge erreichen kann und gleichzeitig der Totmannbügel 10 zwischen der oberen Betriebsposition und seiner unteren inaktiven Position verschwenkt werden kann, ohne dass sich die genannten Teile behindern.

Wenn jedoch der Schalthebel 9 in die Rückwärtsgangposition gemäß Figur 3 verschwenkt wird, so muss der Totmannbügel 10 in der losgelassenen inaktiven unteren Position stehen. Wird er in seine obere Betriebsstellung gemäß Figur 2 verschwenkt, so stößt der Mitnahmestift 10b gegen das obere Ende des Schlitzes 9e und drückt den Schalthebel 9 aus der Rückwärtsgangstellung in den ersten Vorwärtsgang.

Außerdem erkennt man, dass die Position des Schwenklagers 10a nicht nur von der Auslenkung des Totmannbügels 10 abhängt, sondern dass sich dieses Schwenklager - vorzugsweise an seinem freien Ende - an einer Kulissenführung 9f des Schalthebels 9 abstützt. Diese Kulissenführung hat die Form einer spiralförmigen Gleitkufe und das Schwenklager 10a wird durch den Bowdenzug 16 gegen diese Gleitkufe gedrückt. Die Spiralform der Gleitkufe sorgt dafür, dass für jeden Vorwärtsgang des Schalthebels 9 eine andere Auslenkung des Schwenklagers 10a erzeugt wird, wenn der Totmannbügel 10 nach oben in seine Aktivstellung verschwenkt wird. Diese unterschiedlichen Endstellungen des Schwenklagers 10a bewirken entsprechend unterschiedliche Schrägstellungen der Steuerplatte in der Hydraulikpumpe und ergeben somit entsprechend dem eingelegten Vorwärtsgang abgestufte maximale Fahrgeschwindigkeiten des Mähers.

Des Weiteren ist die geometrische Anordnung der Gleitkufe relativ zur Schwenkachse 11 so gewählt, dass der Bereich, an dem sich das Schwenklager 10a bei nach oben geschwenktem Totmannbügel 10 abstützt, relativ steil nach oben läuft. Dadurch ergibt sich eine erhebliche Haltekraft-Entlastung für die Bedienungsperson, wenn sie den Totmannbügel in der oberen aktiven Position halten muss, weil die vom Bowdenzug 16 ausgeübte Zugkraft hauptsächlich von der Gleitkufe 9f aufgenommen wird.

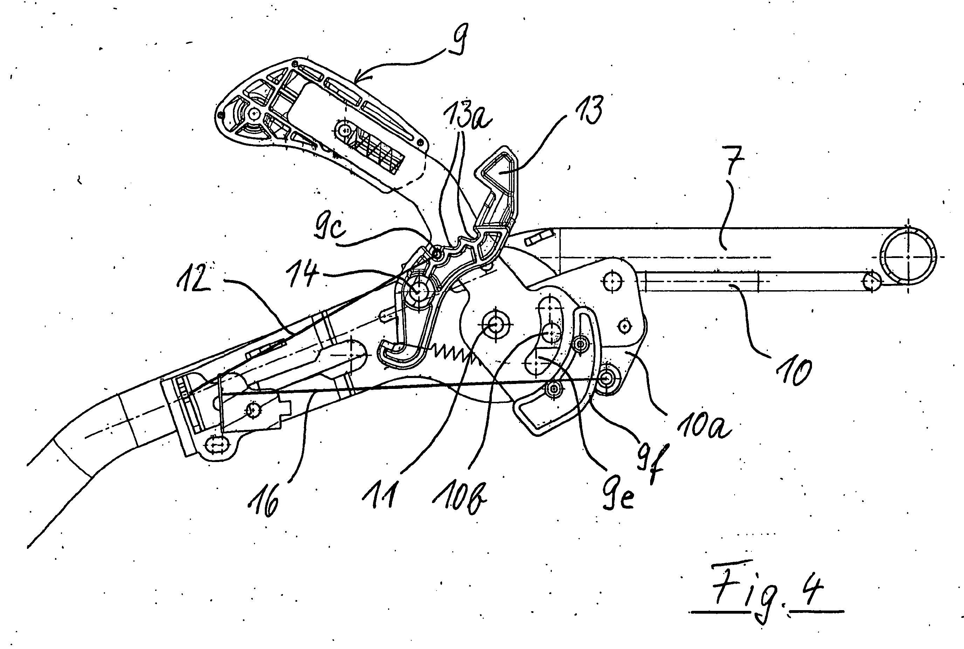

Figur 4 zeigt die Stellung des Schalthebels 9 in maximal nach vorne geschwenkter Position entsprechend der Einstellung für den dritten Vorwärtsgang. Der Totmannbügel 10 befindet sich in der aktiven oberen Betriebsposition. Man sieht, dass er in die untere inaktive Position verschwenken könnte, ohne dass dabei der Mitnahmestift 10b von dem Schlitz 9e blockiert wird. Die freie Verschwenkbarkeit des Totmannbügels 10 ist also in allen Vorwärtsgängen gewahrt. Die Bedienungsperson kann das Gerät auch direkt im zweiten oder dritten Gang anfahren.

Außerdem erkennt man beim Vergleich der Figuren 2 und 4, dass die Gleitkufe 9f das Schwenklager 10a erheblich stärker auslenkt, wenn der Schalthebel im dritten Gang gemäß Figur 4 steht.

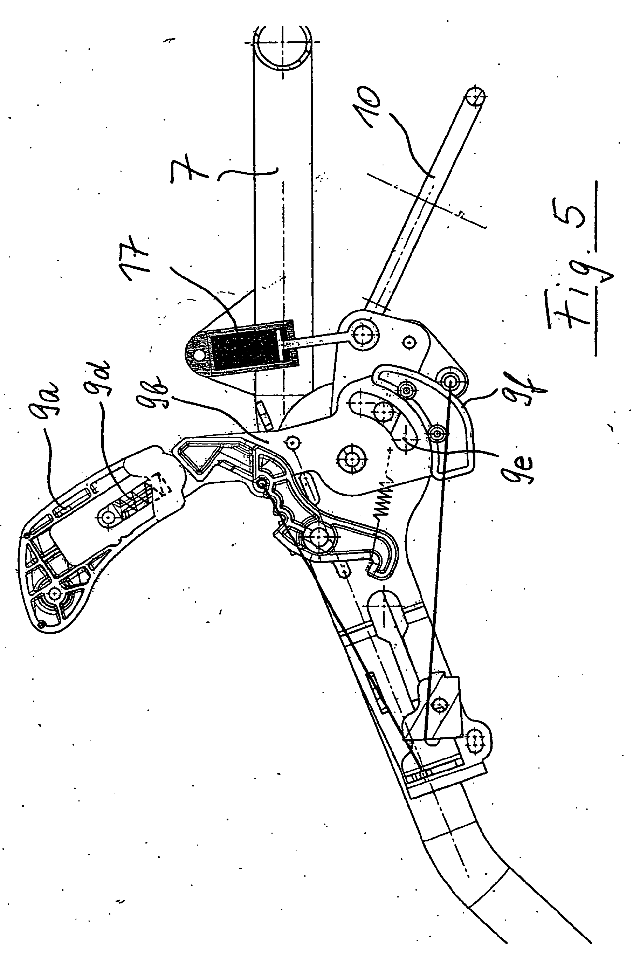

Wird der Totmannbügel losgelassen, so schwenkt er automatisch durch nicht näher dargestellte Federelemente in seine untere inaktive Stellung, in welcher der Fahrantrieb abschaltet. Damit dieses Abschalten nicht zu abrupt erfolgt, zeigt Figur 5 ein Dämpfungselement 17, mit dem das nach unten schwenken des Totmannbügels 10 etwas verzögert wird und ca. 1 bis 2 Sekunden dauert. Im Ausführungsbeispiel besteht das Dämpfungselement 17 aus einem zwischen dem Führungsbügel 7 und dem Totmannbügel 10 angeordneten Hydraulikzylinder.

Bei hydraulischem Fahrantrieb wie im Ausführungsbeispiel gezeigt führt das Loslassen des Totmannbügels dazu, dass die Steuerplatte der Hydraulikpumpe senkrecht zur Hubbewegung der Stempel gestellt wird. Dadurch löst der Umlauf der Stempel über der Steuerplatte keine Hubbewegung aus und es wird kein Hydrauliköl zu den Hydraulikmotoren gefördert. Wird der Totmannbügel hingegen nach oben in die Betriebsstellung gedrückt, so stellt er die Steuerplatte mehr oder weniger schräg, wobei die maximale Schrägstellung durch die Position des Schalthebels, also durch den eingelegten Vorwärtsgang begrenzt wird. Wird der Schalthebel in den Rückwärtsgang verstellt, so kippt er die Steuerplatte in die entgegengesetzte Richtung, wodurch das Hydrauliköl die Antriebsräder in umgekehrter Richtung beaufschlagt. Die Betätigung des Totmannbügels ist im Rückwärtsgang nicht notwendig, sondern führt den Ganghebel automatisch aus dem Rückwärtsgang in den ersten Vorwärtsgang.

Zusammenfassend besteht der Vorteil der vorliegenden Erfindung darin, dass die Bedienung wesentlich erleichtert wird, weil das manuelle Vorwählen des ersten Ganges entfällt und weil die Rückwärtsfahrt allein über den Schalthebel, ohne Betätigung des Totmannbügels, gesteuert wird.

## Patentansprüche

1. Handgeführtes, fahrbares Bodenbearbeitungsgerät mit einem Fahrantrieb, insbesondere Rasenmäher mit vorzugsweise hydraulischem Fahrantrieb, wobei der Fahrantrieb mit einem Schalthebel (9) verbunden ist, der in zumindest einen Vorwärtsgang und zumindest einen Rückwärtsgang einzustellen ist und wobei der Fahrantrieb außerdem mit einem Totmannbügel (10) zusammenwirkt,
**dadurch gekennzeichnet,**
**dass** der Totmannbügel (10) derart mit dem Schalthebel (9) zusammenwirkt, dass die Betätigung des Totmannbügels bei eingelegtem Rückwärtsgang den Schalthebel (9) aus dem Rückwärtsgang in einen Vorwärtsgang, zweckmäßig in den ersten Gang, verstellt und dass der Schalthebel (9) im Rückwärtsgang elastisch in Richtung auf einen Vorwärtsgang belastet ist.

2. Gerät nach Anspruch 1,
**dadurch gekennzeichnet,**
**dass** der Schalthebel (9) ohne Passieren einer Neutralstellung vom Rückwärtsgang in den ersten Vorwärtsgang verstellbar ist.

3. Gerät nach Anspruch 1,
**dadurch gekennzeichnet,**
**dass** der Schalthebel (9) im Rückwärtsgang zur Regulierung der Fahrgeschwindigkeit verstellbar ist.

4. Gerät nach Anspruch 1,
**dadurch gekennzeichnet,**
**dass** der Totmannbügel (10) bei Vorwärtsfahrt zur Regulierung der Fahrgeschwindigkeit dient.

5. Gerät nach Anspruch 1,
**dadurch gekennzeichnet,**
**dass** der Schalthebel (9) mit einem Sperrhebel (9a) verbunden ist, dessen Betätigung Voraussetzung für das Einlegen des Rückwärtsganges ist.

6. Gerät nach Anspruch 1,
**dadurch gekennzeichnet,**
**dass** der Schalthebel (9) mittels einer elastischen Schnappverbindung (9c, 13), insbesondere mittels einer angefederten Klinke, in seinem Vorwärtsgang bzw. Vorwärtsgängen gehalten wird.

7. Gerät nach Anspruch 1,
**dadurch gekennzeichnet,**
**dass** der Totmannbügel (10) gegen Federkraft in seine Betriebsposition verstellbar ist und dass ein Dämpfungselement (17) die Rückstellung in die inaktive Position verzögert.

8. Gerät nach Anspruch 7,
**dadurch gekennzeichnet,**
**dass** das Dämpfungselement (17) ein Hydraulik- oder PneumatikZylinder ist.

9. Gerät nach Anspruch 1,
**dadurch gekennzeichnet,**
**dass** der Fahrantrieb eine Hydraulikpumpe (6) in Form einer Vielstempelpumpe mit variablem Verdrängervolumen aufweist, wobei die Hubbewegung der Stempel durch eine in ihrer Neigung verstellbare Steuerplatte erzeugt wird und dass der Schalthebel (9) bei Vorwärtsfahrt die Maximalneigung dieser Steuerplatte begrenzt.

10. Gerät nach Anspruch 9,
**dadurch gekennzeichnet,**
**dass** die Betätigung des Totmannbügels (10) bei Vorwärtsfahrt die Neigung der Steuerplatte von schwach bis stark verstellt.

11. Gerät nach Anspruch 9,
**dadurch gekennzeichnet,**
**dass** der Schalthebel (9) eine Kulissenführung (9f) für ein am Totmannbügel (10) angeordnetes Schwenklager (10a) aufweist, derart, dass die Kulissenführung (9f) ein von der Schalthebelstellung abhängiges Übersetzungsverhältnis zwischen der Auslenkung des Totmannbügels (10) und der Auslenkung des Schwenklagers (10a) erzeugt und dass die Auslenkung des Schwenklagers (10a) auf die Neigung der Steuerplatte einwirkt.

12. Gerät nach Anspruch 9,
**dadurch gekennzeichnet,**
**dass** der Schalthebel (9) beim Einlegen des Rückwärtsganges die Steuerplatte in Gegenrichtung umkippt und die weitere Betätigung des Schalthebels bei Rückwärtsfahrt die Neigung der Steuerplatte von schwach bis stark verstellt.

## Claims

1. Hand-guided, mobile soil-working machine having a drive means, especially a lawnmower having preferably hydraulic drive means, the drive means being connected to a gear-shift lever (9) which is moveable into at least one forward gear and at least one reverse gear, and the drive means also co-operating with a deadman's handle (10),
**characterised in that**
the deadman's handle (10) co-operates with the gear-shift lever (9) in such a way that when reverse gear is engaged the operation of the deadman's handle moves the gear-shift lever (9) from reverse gear into a forward gear, advantageously into first gear, and in reverse gear the gear-shift lever (9) is resiliently biased in the direction of a forward gear.

2. Machine according to claim 1,
**characterised in that**
the gear-shift lever (9) is movable from reverse gear into the first forward gear without passing through a neutral position.

3. Machine according to claim 1,
**characterised in that**
in reverse gear the gear-shift lever (9) is movable to regulate the driving speed.

4. Machine according to claim 1,
**characterised in that**
during forward travel the deadman's handle (10) is used to regulate the driving speed.

5. Machine according to claim 1,
**characterised in that**
the gear-shift lever (9) is connected to a locking lever (9a) the operation of which is a prerequisite for engagement of reverse gear.

6. Machine according to claim 1,
**characterised in that**
the gear-shift lever (9) is held in its forward gear or forward gears by means of a resilient snap connection (9c, 13), especially by means of a spring-loaded catch.

7. Machine according to claim 1,
**characterised in that**
the deadman's handle (10) is movable into its operating position against the force of a spring, and a damping element (17) delays its return to the inactive position.

8. Machine according to claim 7,
**characterised in that**
the damping element (17) is a hydraulic or pneumatic cylinder.

9. Machine according to claim 1,
**characterised in that**
the drive means has a hydraulic pump (6) in the form of a multi-piston pump having a variable displacement volume, the stroke movement of the pistons being generated by a control plate, the inclination of which is adjustable, and in the case of forward travel the gear-shift lever (9) defines the maximum inclination of that control plate.

10. Machine according to claim 9,
**characterised in that**
during forward travel the operation of the deadman's handle (10) adjusts the inclination of the control plate from shallow to steep.

11. Machine according to claim 9,
**characterised in that**
the gear-shift lever (9) has a slide guide means (9f) for a pivot bearing (10a) arranged on the deadman's handle (10) such that the slide guide means (9f) produces a transmission ratio, dependent upon the gear-shift lever position, between the displacement of the deadman's handle (10) and the displacement of the pivot bearing (10a), and the displacement of the pivot bearing (10a) influences the inclination of the control plate.

12. Machine according to claim 9,
**characterised in that**
on engagement of reverse gear the gelar-shift lever (9) tilts the control plate in the opposite direction, and during reverse travel the further operation of the gear-shift lever adjusts the inclination of the control plate from shallow to steep.

## Revendications

1. Appareil mobile guidé à la main pour le travail du sol comprenant un système d'entraînement, en particulier tondeuse à gazon dotée d'un système d'entraînement de préférence hydraulique, le système d'entraînement étant relié à un levier de vitesses (9) qui peut être réglé dans au moins un rapport de marche avant et au moins un rapport de marche arrière et le système d'entraînement coopérant en outre avec un étrier d'homme mort (10),
**caractérisé en ce que**
l'étrier d'homme mort (10) coopère avec le levier de vitesses (9) de telle sorte que l'actionnement de l'étrier d'homme mort, lorsque le rapport de marche arrière est passé, déplace le levier de vitesses (9) du rapport de marche arrière dans un rapport de marche avant, de manière appropriée dans la première vitesse, et **en ce que** le levier de vitesses (9) dans le rapport de marche arrière est sollicité de manière élastique en direction d'un rapport en marche avant.

2. Appareil selon la revendication 1,
**caractérisé en ce que**
le levier de vitesses (9) peut être déplace du rapport de marche arrière dans le premier rapport de marche avant sans passer par une position neutre.

3. Appareil selon la revendication 1,
**caractérisé en ce que**
le levier de vitesses (9) peut être déplacé dans le rapport de marche arrière pour réguler la vitesse de marche.

4. Appareil selon la revendication 1,
**caractérisé en ce que**
l'étrier d'homme mort (10), lors d'une conduite en marche avant, sert à réguler la vitesse de marche.

5. Appareil selon la revendication 1,
**caractérisé en ce que**
le levier de vitesses (9) est relié à un levier à rochet (9a), dont l'actionnement suppose que le rapport en marche arrière a été passé.

6. Appareil selon la revendication 1,
**caractérisé en ce que**
le levier de vitesses (9) est maintenu dans son rapport de marche avant et/ou ses rapports de marche avant au moyen d'un assemblage à encliquetage élastique (9c, 13), en particulier au moyen d'un cliquet à ressort.

7. Appareil selon la revendication 1,
**caractérisé en ce que**
l'étrier d'homme mort (10) peut être déplacé dans le sens inverse de la force du ressort dans sa position de fonctionnement et **en ce qu'**un élément d'amortissement (17) ralentit le rappel dans la position inactive.

8. Appareil selon la revendication 7,
**caractérisé en ce que**
l'élément d'amortissement (17) est un cylindre hydraulique ou pneumatique.

9. Appareil selon la revendication 1,
**caractérisé en ce que**
le système d'entraînement comprend une pompe hydraulique (6) sous forme d'une pompe à pistons multiples dotée d'un volume de refoulement variable, le déplacement de levée des pistons étant produit par une plaque de commande pouvant être déplacée dans son inclinaison, et **en ce que** le levier de vitesses (9), lors d'une conduite en marche avant, limite l'inclinaison maximale de cette plaque de commande.

10. Appareil selon la revendication 9,
**caractérisé en ce que**
l'actionnement de l'étrier d'homme mort (10), lors d'une conduite en marche avant, déplace l'inclinaison de la plaque de commande d'une faible inclinaison à une forte inclinaison.

11. Appareil selon la revendication 9,
**caractérisé en ce que**
le levier de vitesses (9) comprend un guidage à coulisse (9f) pour un palier pivotant (10a) disposé sur l'étrier d'homme mort (10), de telle sorte que le guidage à coulisse (9f) produit un rapport de transmission dépendant de la position du levier de vitesses entre la déviation de l'étrier d'homme mort (10) et la déviation du palier pivotant (10a), et **en ce que** la déviation du palier pivotant (10a) agit sur l'inclinaison de la plaque de commande.

12. Appareil selon la revendication 9,
**caractérisé en ce que**
le levier de vitesses (9), lorsque le rapport de marche arrière est passé, renverse la plaque de commande dans le sens contraire et l'autre actionnement du levier de vitesses lors d'une conduite en marche arrière déplace l'inclinaison de la plaque de commande d'une faible inclinaison à une forte inclinaison.
